Europäisches Patentamt

European Patent Office

Office européen des brevets

(11) Publication number: **0 311 404 B1**

# EUROPEAN PATENT SPECIFICATION

(45) Date of publication of patent specification: **16.12.92**  (51) Int. Cl.⁵: **B60C 9/00**, B60C 9/06, B60C 9/20

(21) Application number: **88309327.0**

(22) Date of filing: **06.10.88**

(54) **Motor cycle tyre.**

(30) Priority: **08.10.87 JP 255923/87**

(43) Date of publication of application:
**12.04.89 Bulletin 89/15**

(45) Publication of the grant of the patent:
**16.12.92 Bulletin 92/51**

(84) Designated Contracting States:
**DE FR IT**

(56) References cited:
**US-A- 4 390 052**
**US-A- 4 614 215**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Suzuki, Shigehiko**
**15-1-109 Minami Mukonosou 7-chome**
**Amagasaki-shi Hyogo-ken(JP)**

(74) Representative: **Stewart, Charles Geoffrey et al**
**SP TYRES UK LIMITED Tyre Technical Division**
**Fort Dunlop Birmingham B24 9OT(GB)**

Rank Xerox (UK) Business Services

**Description**

The present invention relates to a pneumatic tyre for motor-cycles, which is improved in durability and steering stability under high speed running.

In order to maintain stable running during cornering of motor-cycles which are tilted at a large bank angle, there has been employed a cross ply carcass in which at least two plies of parallel cords are arranged to intersect each other to provide a high lateral rigidity for the motor-cycle tyre.

In such cross ply carcass tyres, however, a vibration of about 1 to 4 Hz, that is, the vibration of the weave mode is liable to occur during high speed running, causing deterioration of steering stability and manoeuvrability. This vibration of the weave mode is a small vibration of the rear wheel caused when the running speed is increased.

In this phenomenon (hereinafter referred as "weave phenomenon") a vibration caused by an external disturbance from the road surface is not damped and grows into a continuous vibration due to the tyre damping capacity being decreased as a result of high speed running.

In particular, racing tyres for use over 250 km/h are required to have characteristics to maintain stable running, and heretofore, in order to increase the lateral rigidity to improve the cornering performance and also to enhance the high speed durability, the tyre has been made with a carcass of cross ply construction in which carcass ply cords are laid at about 26 degrees to the circumferential direction of the tyre and also a breaker having cords laid at the same angle as that of the carcass cords.

However, in such prior art tyres having the breaker ply cords arranged at the same angle as those of the carcass ply cords, sympathetic vibrations are liable to occur in the plies, and as a result, the amplitude of the vibration is increased, and the speed range within which such vibrations are caused is widened.

On the other hand, there have been suggested tyres having a structure in which the breaker cords are arranged at more than 20 degrees and the carcass cords are arranged at about 30 degrees so that the angles of the breaker cords are different from those of the carcass ply cords. However, such a structure does not sufficiently increase the lateral rigidity of the tread region, and it is very difficult to maintain steering stability and durability under high speed running. Furthermore, if cords having a high rigidity such as aromatic polyamide fibre cords are employed in the breaker, breaker edge separation is liable to occur and such tyre a construction is also insufficient in high speed durability.

A tyre according to the preamble of claim 1 is known, e.g. from US-A-4 614 215, which shows a motorcycle bias tyre having a belt whose cords are at an angle of 10°-20° to the circumferential direction of the tyre.

It is therefore, a general object of the present invention to provide a motor-cycle tyre in which the above mentioned weave phenomenon is diminished and the high speed steering stability is improved, while the high speed durability is maintained.

Another object of the present invention is to provide a motor-cycle tyre in which both durability and steering stability under high speed running are improved without using high rigidity cords, and the above mentioned weave phenomenon is effectively prevented.

According to one aspect of the present invention, a motor-cycle tyre comprises bead cores one disposed in each bead region of the tyre, a carcass extending between the bead regions and turned up at both edges around the bead cores and a tread region, the carcass having at least two plies of cords arranged at 22 to 24 degrees to the circumferential direction of the tyre, and a breaker disposed between the tread and carcass having two plies of cords arranged at 14 to 16 degrees to the circumferential direction of the tyre.

An embodiment of the present invention will now be described by way of example only with reference to the accompanying diagrammatic drawings in which:-

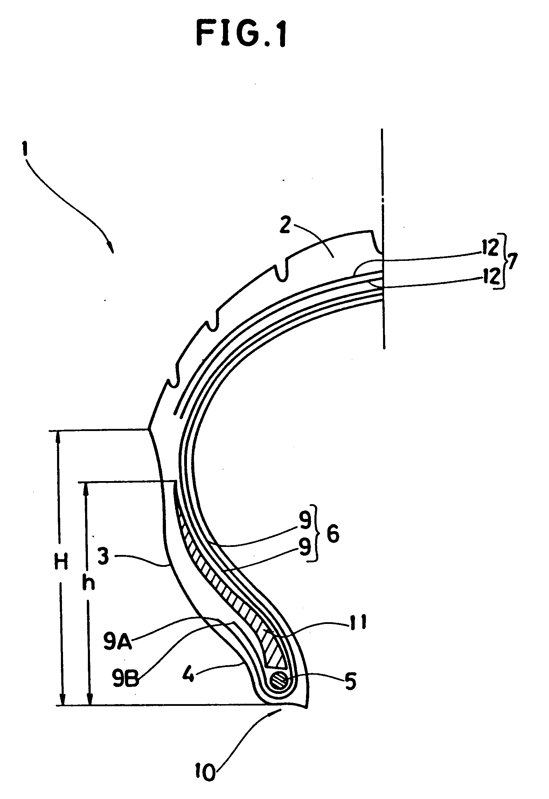

Fig.1. is a sectional view of a left half of a motor-cycle tyre.

A motor-cycle tyre 1 has a tread region 2, a pair of sidewall regions 3 extending radially inwardly one from each edge of the tread 2 and a pair of bead regions 4 positioned at the radially inward ends of the sidewall regions respectively. The tyre also comprises a pair of bead cores 5 disposed one in each bead region, a carcass 6 extending from one bead region to the other bead region through the sidewall regions 3 and tread region 2, a tread and a pair of sidewalls disposed on the carcass. A breaker 7 is disposed radially outwardly of the carcass 6 between the tread and the carcass 6.

The carcass 6 comprises at least two plies 9 of cords laid at 20 to 28 degrees, more preferably 22 to 24 degrees with respect to the circumferential direction of the tyre. The carcass cords of one ply intersect with those of the other ply.

The carcass 6 is turned up in both edge portions around the respective bead cores 5 from the inside to the outside thereof, and in this example, the two carcass ply turnups, an axially outer turnup 9A and an

EP 0 311 404 B1

inner turnup 9B, are formed axially outwardly of each bead core 5.

Preferably, the end of the outer turnup 9A is extended radially outwardly beyond the end of the inner turnup 9B to cover the inner turnup completely, thereby mitigating stress concentration on the end of the inner turnup 9A. Further, to reinforce the sidewall regions 3, the heights of the inner and outer turnups from the bead base 10 are respectively set in a range of 20 to 40% of and an angle of 25 to 80% of the height H of the tread edge from the bead base respectively.

The cords of the carcass ply 9 are made of organic fibres such as nylon, polyester, rayon or aromatic polyamide.

In addition to the above mentioned carcass structure in which the carcass 6 is turned up around the bead cores 5 from the inside to the outside, a structure in which the carcass 6 is turned up reversely from the outside to then inside or a combination structure of the former two may be applied to the carcass 6 in the present invention.

The above mentioned breaker 7 comprises two plies 12 of cords laid at 14 to 18 degrees, more preferably 14 to 16 degrees with respect to the circumferential direction of the tyre so that the cords of one ply cross the cords of the other ply.

The width of the breaker 7 is set in the range of 60 to 120 % and more preferably in the range of 80 to 100 % of the width of the tread region 2.

The textile fabrics used for the breaker 7 are made of organic material cords such as nylon, polyester, rayon or aromatic polyamide (aramid).

The breaker 7 increases the rigidity in the circumferential direction of the tyre, and restrains lifting of the tread crown which us caused by centrifugal force acting on the tyre during high speed running. Accordingly,, the stability in straight running is improved, and rubber separation in the tread region is prevented which improves the high speed endurance.

As described above, in the breaker 7, the cords are laid at different angles from those of the carcass cords. Therefore, the small vibrations generated in the plies of the carcass and breaker during high speed running, interfere with each other, and as a result, the weave phenomenon is reduced compared with a conventional tyre to increase steering stability.

Furthermore, a triangular bead apex 11 made of rubber having a JIS hardness of 45 to 95 degrees, is provided in each bead region.

The bead apex 11 is extended radially outwardly tapering from the bead core 5 into the sidewall region 3 and in order to increase the transverse stiffness of the tyre, the height h of the outer end of the bead apex 11 from the bead base 10 is set in the range of 85 to 100% of the height H of the tread edge from the bead base. Note however, that the height h is set to be different from that of the carcass ply turnup 9A so that the two ends not at the same point, thereby avoiding stress concentration.

## Working Examples

140/80V17 motor-cycle tyres for a rear wheel were made including example tyres of the present invention and reference tyres.

The test tyres have substantially same structure as the one shown in Figure 1. The detailed specifications thereof are set out in Table 1.

Each test tyre was tested to evaluate the natural vibration generating speed and steering stability. The tests were feel tests by a skilled test rider done on a test circuit of an official course. The test results are shown in Table 2, wherein the higher the value the better the performance.

Further, each tyre was tested using a drum tester to evaluate durability at high speed. The test results are shown in Table 2.

Table 1

|  | Working Ex.1 | Working Ex.2 | Ref. tyre 1 |
|---|---|---|---|
| Carcass<br>Cord material<br>Cord angle | 2 plies<br>Nylon 2/1890d<br>24 deg. | 2 plies<br>Nylon 2/1890d<br>24 deg. | 2 plies<br>Nylon 2/1890d<br>26 deg. |
| Breaker<br>Cord material<br>Cord angle | 2 plies<br>Nylon 2/1890d<br>16 deg. | 2 plies<br>Nylon 2/1890d<br>16 deg. | 2 plies<br>Nylon 2/1890d<br>26 deg. |
| Bead apex | none | provided<br>height=20 mm | none |
| Tread rubber<br>JIS hardness | 65 | 65 | 65 |
| High-speed<br>durability (*) | 270 km/h-16 min.<br>Tread crown<br>was loosened | 270 km/h-10 min.<br>Tread crown<br>was loosened | 260 km/h-10 min.<br>Tread crown<br>was loosened |

| Ref. tyre 2 | Ref. tyre 3 | Ref. tyre 4 | Ref. tyre 5 |
|---|---|---|---|
| 2 plies<br>Nylon 2/1890d<br>24 deg. | 3 plies<br>Nylon 2/1890d<br>24 deg. | 2 plies<br>Nylon 2/1890d<br>30 deg. | 2 plies<br>Nylon 2/1890d<br>30 deg. |
| 2 plies<br>Nylon 2/1890d<br>20 deg. | 1 plies<br>Nylon 2/1890d<br>26 deg. | 2 plies<br>Aramid 2/1500d<br>20 deg. | 2 plies<br>Nylon 2/1890d<br>20 deg. |
| none | none | none | none |
| 65 | 65 | 65 | 65 |
| 260 km/h-14 min.<br>Tread crown<br>was loosened | 250 km/h-16 min.<br>Tread crown<br>was loosened | 240 km/h-7 min.<br>Tread shoulder<br>was loosened | 250 km/h-16 min.<br>Tread crown<br>was loosened |

(*) While the tyres run under the following test conditions, the running speed was increased every 10 km/h from 250 km/h at an interval of 20 min.
Test conditions: Inner pressure=3.0 kgf/sq.cm, and Load=182 kg/tyre
The "270 km/h-16 min." means that the tyre concerned was broken after running for 16 minutes at 270 km/h. 260 km/h-20 min. = Standard

4

Table 2

|  | Working Ex.1 | Working Ex.2 | Ref. tyre 1 |
|---|---|---|---|
| Steering stability at straight running (*) | 5 | 5 | 4 |
| Weave phenomenon | non at 270 km/h | non at 270 km/h | occurred at 260 km/h |
| Steering stability at cornering (*) | 5 | 5 | 3 |
| Weave phenomenon | occurred at 190 km/h | occorred at 190 km/h | occurred at 180 km/h |

(*) Standard = 3

|  | Ref. tyre 2 | Ref. tyre 3 | Ref. tyre 4 | Ref. tyre 5 |
|---|---|---|---|---|
|  | 4 | 3 | 4 | 4 |
|  | occurred at 260 km/h | occurred at 250 km/h | occurred at 260 km/h | occurred at 250 km/h |
|  | 3 | 3 | 3 | 3 |
|  | occurred at 180 km/h | occurred at 180 km/h | occurred at 180 km/h | occurred at 180 km/h |

As described above, in the motor-cycle tyre according to the present invention, the breaker cords are laid at such small angles as 14 to 18 degrees with respect to the circumferential direction whereby the lifting of the tread crown portion during high speed running is effectively restrained, and accordingly the steering stability in straight running together with durability at high speed running, are also improved. Further, in the present invention, the angles at which the breaker cords are arranged are different from those of the carcass cords. Accordingly, the speed at which the motor-cycle starts to vibrate, that is, the weave phenomenon generating speed is shifted to a higher speed than that of conventional tyres in which the carcass cord angles are almost the same as the breaker cord angles. As a result, the speed range for stable running is widened, and the amplitude of vibrations is decreased, whereby the high speed steering stability is improved.

**Claims**

1. A motor-cycle tyre comprising bead cores (5), one disposed in each bead region (4) of the tyre, a carcass (6) extending between said bead regions (4) and turned up at both edges around bead cores (5), a tread (2) disposed radially outward of said carcass (6) and a breaker (7) disposed between said tread (2) and carcass (6), the carcass (6) having at least two plies (9) of cords arranged at a first angle to the circumferential direction of the tyre and the breaker (7) having two plies (12) of cords arranged at

5

a second angle to the circumferential direction of the tyre, characterised in that the first angle is within a range of 22 to 24 degrees and the second angle is within a range of 14 to 16 degrees.

2. A motor-cycle tyre according to claim 1 characterised in that the heights of the inner and outer ply turnups (9B,9A) from the bead base (10) are in the range of 20 to 40% and 28 to 80% of the height of the tread edge respectively.

3. A motor-cycle tyre according to claim 1 or 2 characterised in that the breaker (7) has a width in the range of 60 to 120% of the width of the tread (2).

4. A motor-cycle tyre according to claim 1 or 2 characterised in that the breaker (7) has a width in the range of 80 to 100% of the width of the tread (2).

**Patentansprüche**

1. Motorrad-Reifen mit Wulstkernen (5), die je einzeln in jedem Wulstbereich (4) des Reifens angeordnet sind, einer sich zwischen den Wulstbereichen (4) erstreckende Karkasse (6), die an beiden Kanten um die Wulstkerne (5) nach oben zurückgeschlagen ist, einen radial außerhalb der Karkasse (6) angeordneten Laufstreifen und einen zwischen em Laufstreifen (2) und der Karkasse (6) angeordneten Gürtel, wobei die Karkasse (6) mindestens zwei Lagen (9) von Korden besitzt, die mit einem ersten Winkel zur Umfangsrichtung des Reifens gelegt sind, und der Gürtel (7) zwei Lagen (12) von Korden besitzt, die mit einem zweiten Winkel zur Umfangsrichtung des Reifens gelegt sind, dadurch gekennzeichnet, daß der erste Winkel sich innerhalb eines Bereichs von 22 bis 24° befindet und der zweite Winkel innerhalb eines Bereichs von 14 bis 16°.

2. Motorrad-Reifen nach Anspruch 1, dadurch gekennzeichnet, daß die Höhen des inneren und des äußeren Lagenaufschlags (9B, 9A) vom Wulstgrund (10) sich im Bereich von 20 bis 40% bzw. 28 bis 80% der Höhe der Laufstreifenkante befinden.

3. Motorrad-Reifen nach Anspruch 1 oder 2, dadurch gekennzeichnet, daß der Gürtel (7) eine Breite im Bereich von 60 bis 120° der Breite des Laufstreifens (2) besitzt.

4. Motorrad-Reifen nach Anspruch 1 oder 2, dadurch gekennzeichnet, daß der Gürtel (7) eine Breite im Bereich von 80 bis 100% der Breite des Laufstreifens (2) besitzt.

**Revendications**

1. Pneumatique de motocyclette comprenant des tringles (5), disposées chacune dans une région de talon (4) du pneumatique, une carcasse (6) disposée entre les régions de talon (4) et repliée aux deux bords autour des tringles (5), une bande de roulement (2) disposée radialement à l'extérieur de la carcasse (6) et une nappe sommet (7) disposée entre la bande de roulement (2) et la carcasse (6), la carcasse (6) ayant au moins deux nappes (9) de câblés faisant un premier angle avec la direction circonférentielle du pneumatique, la nappe sommet (7) ayant deux nappes (12) de câblés formant un second angle avec la direction circonférentielle du pneumatique, caractérisé en ce que le premier angle est compris entre 22 et 24° et le second angle est compris entre 14 et 16°.

2. Pneumatique de motocyclette selon la revendication 1, caractérisé en ce que les hauteurs des parties repliées des nappes interne et externe (9B, 9A) par rapport à la base de talon (10) sont comprises entre 20 et 40 % et entre 28 et 80 % de la hauteur du bord de la bande de roulement, respectivement.

3. Pneumatique de motocyclette selon la revendication 1 ou 2, caractérisé en ce que la nappe sommet (7) a une largeur comprise entre 60 et 120 % de la largeur de la bande de roulement (2).

4. Pneumatique de motocyclette selon la revendication 1 ou 2, caractérisé en ce que la nappe sommet (7) a une largeur comprise entre 80 et 100 % de la largeur de la bande de roulement (2).

# FIG.1